# EUROPÄISCHE PATENTSCHRIFT

(11) **EP 2 514 386 B1**
(45) Veröffentlichungstag und Bekanntmachung des Hinweises auf die Patenterteilung: **02.03.2016**
(21) Anmeldenummer: 11162926.7
(22) Anmeldetag: 19.04.2011
(51) Int. Cl.: A61C 1/00, A61C 19/00

(54) **Medizinischer, insbesondere dentaler, Adapter**
Medical, in particular, dental adapter
Adaptateur médical, en particulier dentaire

(43) Veröffentlichungstag der Anmeldung: 24.10.2012
(73) Patentinhaber: W & H Dentalwerk Bürmoos GmbH, 5111 Bürmoos (AT)
(72) Erfinder: Tannebaum, Wolfgang, 92637, Weiden (DE)

(56) Entgegenhaltungen:
- EP-A1- 1 982 668
- WO-A1-01/12095
- DE-A1- 10 225 232
- US-A1- 2008 145 817
- US-A1- 2008 203 280

## Beschreibung

Die vorliegende Erfindung bezieht sich auf einen medizinischen, insbesondere dentalen, Adapter sowie auf ein Verfahren zum Nachweis der Inbetriebnahme, Reinigung und/ oder Pflege eines medizinischen, insbesondere dentalen, Instruments.

Medizinische, insbesondere dentale, Instrumente bedarf es in regelmäßigen Abständen einer Reinigung und Pflege zu unterziehen. Als zu reinigende Instrumente werden insbesondere gerade, gebogene, oder pistolenförmige Handstücke als auch Teile von Handstücken, wie z. B. Handstückköpfe mit einer Werkzeugaufnahme zur Aufnahme eines Behandlungswerkzeugs, Adapter, Lichtsonden und Kupplungen verstanden. Durch die Instrumente erstrecken sich oftmals Versorgungsleitungen zum Antrieb eines Behandlungswerkzeugs sowie Fluidleitungen. Bei den Leitungen handelt es sich insbesondere um Getriebekanäle, welche bevorzugt durch das Gehäuse der Instrumente gebildet sind, um den Antriebsstrang des Instruments aufnehmen, oder um Fluidkanäle für Luft, Wasser, Ozon, oder Spray.

Zur Aufbereitung der Instrumente stehen dem Anwender eine Reihe von Reinigung- und Pflegegeräte zu Verfügung. Diese Geräte dienen insbesondere zur Reinigung, Desinfektion, Sterilisation und/ oder Pflege der medizinischen Instrumente. Hierzu können insbesondere Fluide, vorzugsweise Flüssigkeiten, wie zum Beispiel Kaltwasser oder Heißwasser, oder Gase, wie zum Beispiel Wasserdampf oder Druckluft, Desinfektionsmittel, Sterilisationsmittel, oder Schmiermittel verwendet werden. Die Geräte weisen oftmals, neben einer Vorrichtung zur Außenreinigung, insbesondere eine Medienzuführung zur Reinigung der im Inneren des Handstücks angeordneten Versorgungs- und Fluidleitungen auf. Hierzu werden die medizinischen Instrumente während der Aufbereitung mit der Medienzuführung des Reinigungs- oder Pflegegeräts verbunden.

Die Art der Aufbereitung der medizinischen, insbesondere dentalen, Instrumente ist abhängig vom Einsatz der Instrumente. Des Weiteren sind die Instrumente in regelmäßigen Abstanden zu Pflegen. Die Zyklen hierfür werden seitens der verschiedenen Hersteller vorgegeben. Folglich ist die Art und Weise der Aufbereitung abhängig von dem Einsatz der Instrumente sowie von den Vorgaben der Hersteller der Instrumente.

Die Aufbereitung wiederum kann mittels verschiedenster Geräte erfolgen. Zur einfachen Pflege und Reinigung kann auf manuelle Reinigungs- oder Pflegegeräte, wie z.B. Spraydosen, zurückgegriffen werden. Eine maschinelle Aufbereitung erfolgt mittels Sterilisatoren, Desinfektoren, automatischen Reinigungs- oder Pflegegeräten, oder mittels Kombinationsgeräten, welche mehrere Aufbereitungsschritte in einem Gerät vereinen.

Eine korrekte Überwachung der Hygiene, insbesondere in einer zahnärztlichen Praxis mit mehreren Instrumenten, stellt somit eine nahezu unlösbare Aufgabe dar. Erfolgt die Aufbereitung zu spät, oder wird eine falsche Aufbereitung durchgeführt, besteht die Gefahr von einer möglichen Infektion seitens des Patienten oder von Schäden bei dem Instrument. Die manuelle Überwachung der Hygiene birgt somit die Gefahr von möglichen Fehlerquellen.

Des Weiteren ist eine Überwachung des Reinigungs- oder Pflegeprozesses selbst erforderlich. Fehlende Reinigungs- oder Pflegemittel, eine falsche Anordnung des zu reinigenden Instruments in dem Gerät, oder eine falsche Programmwahl können ebenfalls zu einer fehlerhaften Aufbereitung führen.

Im Stand der Technik sind zwar medizinische, insbesondere dentale, Instrumente mit Mitteln zum Erfassen, Speichern und/ oder Anzeigen von Daten sowie Mittel zum Erzeugen von Energie in den Instrumenten bereits bekannt, diese sind jedoch nicht zum Nachweis der Inbetriebnahme, Reinigung und/ oder Pflege von medizinischen, insbesondere dentalen, Instrumenten geeignet.

In der EP 1 982 668 A1 zum Beispiel ist ein medizinischer, insbesondere dentaler, Adapter mit zwei Kupplungsvorrichtungen zum Anschließen eines medizinischen Instruments sowie zum Verbinden des Adapters mit einem Versorgungsschlauch offenbart. Der Adapter weist neben einem Generator zur Erzeugung von elektrischer Energie einen Verbraucher auf. Dieser Verbraucher ist insbesondere als Messsensor, vorzugsweise zur Messung von einem Drehmoment, einer Drehzahl oder einer Schallstärke ausgebildet. Die DE 102 25 232 A1 offenbart ein dentales Instrument sowie ein Reinigung- oder Pflegegerät für ein solches Instrument, wobei das Instrument und das Reinigungs- oder Pflegegerät ein Kupplungsteil aufweist, welches mit einer Speichereinheit ausgestattet ist, um derartige Daten, wie zum Beispiel Drehzahlen und/ oder Drehmomente, zu speichern. Aus der WO 01/12095 A1 ist des Weiteren ein dentales Handstück bekannt, das einen fluidbetriebenen Generator sowie einen Energiespeicher aufweist, um die von der Energieerzeugungseinheit erzeugte Energie zu speichern. Die US 2008/203280 A1 offenbart hingegen ein medizinisches Handstück, das ein Display aufweist.

Der vorliegenden Erfindung liegt daher die Aufgabe zugrunde eine Vorrichtung und ein Verfahren zum zuverlässigen Nachweis der Inbetriebnahme, Reinigung und/ oder Pflege eines medizinischen, insbesondere dentalen, Instruments zu schaffen.

Gemäß der Erfindung ist dazu ein medizinischer, insbesondere dentaler, Adapter zum Nachweis der Inbetriebnahme, Reinigung und/ oder Pflege eines medizinischen, insbesondere dentalen, Instruments, vorgesehen, der umfasst: ein Gehäuse, eine erste Anschlussvorrichtung zum, insbesondere lösbaren, Anschließen des medizinischen, insbesondere dentalen, Instruments an den Adapter, eine zweite Anschlussvorrichtung zum, insbesondere lösbaren, Verbinden des Adapters mit einer Fluidquelle und/ oder einer Antriebseinheit, eine Sensoreinheit mit zumindest einem Sensor , eine Sende- und/ oder Empfangseinheit, welche ausgebildet ist von der Sensoreinheit erfasste Daten zu empfangen und/ oder auszugeben, sowie eine durch die Fluidquelle oder Antriebseinheit antreibbare Energieerzeugungseinheit, die ausgebildet ist die Sensoreinheit und/ oder die Sende- und/ oder Empfangseinheit mit elektrischer Energie zu versorgen. Der zumindest eine Sensor der Sensoreinheit ist ausgebildet, einen Betriebszustand der Energieerzeugungseinheit zu bestimmen, z.B. die Drehung eines Bauteils der Energieerzeugungseinheit oder dessen Drehzahl.

Beide Anschlussvorrichtungen des Adapters sind bevorzugt durch standardisierte Schnittstellen, insbesondere mit einem Kupplungszapfen oder einer Kupplungsausnehmung, für Turbinen-, Motor-, Winkel-, oder Handstückanschlüsse ausgebildet. Diese weisen wiederum eine oder mehrere Übergabestellen für Fluide wie z.B. Luft, Wasser oder Spray auf.

Der Adapter selbst weist bevorzugt eine Fluidleitvorrichtung zur Förderung eines Fluidstroms, insbesondere von einer Fluidquelle einer dentalen Einheit oder von einem Reinigungs- oder Pflegegerät, durch den Adapter zu einem an den Adapter angeschlossenen medizinischen, insbesondere dentalen, Instrument auf. Die Fluidleitvorrichtung umfasst vorzugsweise mehrere Fluidkanäle für die verschiedenen Fluide.

Gemäße einem weiteren Ausführungsbeispiel ist die Energieerzeugungseinheit des medizinischen Adapters durch einen Generator ausgebildet. Dieser weist bevorzugt ein durch einen Fluidstrom in Rotation versetzbares Laufrad auf. Das Laufrad kann hierbei in der Fluidleitvorrichtung direkt in einem Fluidkanal, welcher sich zwischen den beiden Übergabestellen der zwei Anschlussvorrichtungen erstreckt, oder in einem Bypass eines der Fluidkanäle, angeordnet sein. Der Generator wird somit durch die Fluide, insbesondere durch Wasser, Wasserdampf, Druckluft, Desinfektionsmittel, Sterilisationsmittel, oder Schmiermittel, der Fluidquelle der dentalen Einheit oder des Reinigungs- oder Pflegegeräts betrieben. Des Weiteren kann der Generator mit einer in Rotation versetzbaren Welle versehen sein, die mittels einer Antriebseinheit der dentalen Einheit oder des Reinigungs- oder Pflegegeräts antreibbar ist. Hierbei treibt eine Welle der Antriebseinheit oder des Reinigungs- oder Pflegegeräts die Welle des Generators, welche insbesondere den Rotor des Generators bildet, an. Durch die Rotation des Rotors relativ zum Stator des Generators erzeugt dieser elektrische Energie.

Zumindest eine zweiter Sensor der Sensoreinheit ist vorzugsweise durch einen Temperatursensor, Drucksensor, Durchflusssensor, Zeitglied, Farbsensor, oder Sensor zur Analyse der Betriebsmedien ausgebildet.

Der Sensor ist bevorzugt in dem Gehäuse des Adapters oder außerhalb des Gehäuses angeordnet. Hierbei befindet sich der Sensor, vorzugsweise ein Durchflusssensor oder Drucksensor, in einem der mehreren Fluidkanäle für Luft, Wasser oder Spray der Fluidleitvorrichtung. Hierdurch kann festgestellt werden, welche Medien dem medizinischen Instrument während des Gebrauchs, der Reinigungs- oder Pflege zugeführt werden. Des Weiteren sind vorzugsweise zumindest ein Temperatursensor sowie ein Zeitglied in dem medizinischen Adapter angeordnet. Folglich kann durch die Ermittlung der Temperatur und des Drucks der dem Instrument zugeführten Reinigungs-, Pflege oder Antriebsmedien, sowie durch die Erfassung der Zeit der Inbetriebnahme, Reinigung oder Pflege, insbesondere die Art der durchgeführten oder durchzuführenden Aufbereitung bestimmt werden.

Bei der Verwendung des medizinischen Adapters zur Evaluierung eines Reinigungs- oder Sterilisationsprozesses weist dieser zumindest einen, vorzugsweise zwei Steckplätze für Testanschmutzungen auf. Testanschmutzungen sind Prüfkörper, welche aus einer Edelstahlplatine mit einer darauf aufgebrachten Anschmutzung bestehen, so dass eine Verschmutzung des Instruments simuliert werden kann. Der Adapter, insbesondere die Energieerzeugungseinheit, wird hierbei durch die Reinigungs- oder Sterilisationsmedien des Reinigungs- oder Sterilisationsgerät betrieben. Ein oder mehrere Farbsensoren dienen zur Beurteilung des Zustandes der Testanschmutzung nach der Reinigung und/ oder Sterilisation.

In einer weiteren Ausführungsform weist der Adapter einen Energiespeicher auf, um die von der Energieerzeugungseinheit erzeugte Energie zu speichern. Dies ermöglicht eine Bereitstellung von Energie insbesondere dann, wenn die Energieerzeugungseinheit keine Energie erzeugt. Dieser Energiespeicher ist vorzugsweise in dem Gehäuse angeordnet und austauschbar.

Gemäß einem weiteren Ausführungsbeispiel weist der medizinische Adapter eine Speichereinheit auf, um Sensordaten oder davon abgeleitete Daten zu speichern. Zum Beschreiben der Speichereinheit und zur Ausgabe von Daten aus der Speichereinheit ist diese bevorzugt mit der Sensoreinheit sowie mit der Sende- und/ oder Empfangseinheit verbunden.

Die Sende- und/ oder Empfangseinheit ist zum Senden und/ oder Empfangen von Sensordaten oder davon abgeleitete Daten kabelgebunden oder kabellos ausgebildet. Um Daten von dem Adapter auf eine dentale Einheit, auf das Reinigungs- oder Pflegegerät, oder insbesondere auf das mit dem Adapter über die Anschlussvorrichtung verbundene medizinische, insbesondere dentale, Instrument zu übertragen, weist vorzugsweise die erste und/ oder zweite Anschlussvorrichtung des Adapters elektrische Kontakte auf. Alternativ kann die Datenübertragung kabellos, insbesondere induktiv z.B. mittels RFID, über eine oder mehrere Sende- und Empfangsspulen erfolgen. Diese sind ebenfalls bevorzugt im Bereich der ersten und/ oder zweiten Anschlussvorrichtung angeordnet.

Zur Anzeige der mittels der Sensoreinheit erfassten Sensordaten oder davon abgeleitete Daten, insbesondere der Betriebsparameter der Antriebseinheit oder des Reinigungs- oder Pflegegeräts, oder zur Anzeige des Zustandes des mit dem Adapter verbundenen medizinischen Instruments, wie z.B. gereinigt, gepflegt, desinfiziert, oder sterilisiert, oder der Art der Aufbereitung, die erfolgen soll, wie z.B. zu reinigen, zu pflegen, zu desinfizieren, oder zu sterilisieren, weist der Adapter eine Anzeigeeinheit auf. Die Anzeigeeinheit ist hierbei bevorzugt graphisch durch ein Display, oder durch eine oder mehrere Leuchtdioden ausgebildet.

Gemäß einem weiteren Ausführungsbeispiel weist der Adapter eine Anzeigesteuerung auf, welche ausgebildet ist externe Anzeigemittel, insbesondere an der Fluidquelle, der Antriebseinheit und/ oder an dem medizinischen, insbesondere dentalen, Instrument, anzusteuern, so dass die Sensordaten oder davon abgeleitete Daten an dem externen Anzeigemittel anzeigbar sind. Bevorzugt wird der Anwender über die Instrumentenbeleuchtung des medizinischen Instruments über den Zustand des aufzubereitenden oder bereits gereinigten Instruments informiert. Die Anzeigesteuerung zeigt so mittels der Instrumentenbeleuchtung, vorzugsweise durch Blinken oder Farbwechsel, an, dass das Gerät nicht/ oder ordnungsgemäß aufbereitet wurde.

Die Erfindung betrifft noch ein Reinigungs- oder Pflegegerät für medizinische, insbesondere dentale, Instrumente, welches einen medizinischen Adapter nach einem der vorherigen Ausführungsbeispiele aufweist.

Bei dem erfindungsgemäßen Verfahren erfolgt der Nachweis der Inbetriebnahme, Reinigung und/ oder Pflege eines medizinischen, insbesondere dentalen, Instruments unter Verwendung eines medizinischen, insbesondere dentalen, Adapters durch das, insbesondere lösbare, Verbinden des Adapters mittels der ersten Anschlussvorrichtung mit einem medizinischen, insbesondere dentalen, Instrument, sowie mittels einer zweiten, insbesondere lösbaren, Anschlussvorrichtung mit einer Fluidquelle und/ oder einer Antriebseinheit, Erzeugen von elektrischer Energie mittels der durch die Fluidquelle oder Antriebseinheit antreibbaren Energieerzeugungseinheit, um die Sensoreinheit und/ oder Sende- und/ oder Empfangseinheit des Adapters mit elektrischer Energie zu versorgen, Erfassen eines Betriebszustandes der Energieerzgungseinheit mittels der Sensoreinheit, sowie Ausgeben zumindest eines Sensorwerts oder eines davon abgeleiteten Werts, insbesondere zur Inbetriebnahme, Reinigung, oder Pflege des medizinischen Instruments mittels der Sende- und/ oder Empfangseinheit.

Die vorliegende Erfindung zum Nachweis der Inbetriebnahme, Reinigung und/ oder Pflege eines medizinischen, insbesondere dentalen, Instruments zeichnet sich durch eine Reihe erheblicher Vorteile aus.

Durch den medizinischen, insbesondere dentalen, Adapter wird eine Überwachung der Hygiene von medizinischen Instrumenten gewährleistet.

Zunächst ist es möglich mittels des medizinischen Adapters die Art und Weise der durchzuführenden Reinigung und/ oder Pflege, insbesondere abhängig vom vorherigen Einsatz des Instruments und/ oder von dem Typ des medizinischen, insbesondere dentalen, Instruments zu bestimmen. Hierzu wird der Adapter zwischen Fluidquelle und/ oder Antriebseinheit einer Dentaleinheit und dem medizinischen Instrument gekuppelt. An Hand der Betriebsparameter der während des Einsatzes dem medizinischen Instrument zugeführten Antriebsmedien und/ oder der zugeführten Antriebsbewegung kann die Sensoreinheit des Adapters die Art des Einsatzes bestimmen. Des Weiteren ist es möglich, mittels der Sende- und/ oder Empfangseinheit des Adapters, den Typ des angeschlossenen Instruments zu bestimmen. Hierzu kann eine Speicher, insbesondere ein Transponder, in dem medizinischen Instrument mittels der Sende- und / oder Empfangsvorrichtung abgefragt werden. Nach der Feststellung der Art des Einsatzes oder der Verwendung des Instruments sowie des Typs des Instruments erfolgt mittels des Adapters, insbesondere durch Abgleich der durch die Sensoreinheit und der Sende- und/ oder Empfangseinheit erfassten Daten mit Referenzdaten, welche vorzugsweise in einer Speichereinheit des medizinischen Adapters hinterlegt sind, die Bestimmung der Art der durchzuführenden Aufbereitung, wie z.B. reinigen, pflegen, desinfizieren, und/ oder sterilisieren.

Die gewonnen Daten, insbesondere die Art der Aufbereitung, können wahlweise auf das medizinische Instrument, insbesondere in dessen Speicher, übertragen werden, oder bei fortlaufender Ankupplung des Adapters an das medizinische Instrument auf dem Adapter, insbesondere in dessen Speichereinheit, verbleiben.

Des Weiteren ist es möglich die Daten von der Speichereinheit des Adapters, oder von dem Speicher des Handstücks, auf das Reinigungs- oder Pflegegerät zu übertragen, so dass das Reinigungs- oder Pflegegerät die Art der Aufbereitung bestimmen kann.

Bei der folgenden Aufbereitung des Instruments wird mittels eines zweiten mit dem Reinigungs- oder Pflegegerät kuppelbaren medizinischen Adapters, oder mittels des mit dem Instrument fortlaufend verbundenen Adapters, insbesondere mittels dessen Sensoreinheit, die Art der Reinigung oder Pflege zumindest an Hand des Betriebszustandes der Energieerzeugungseinheit.

Betriebsparameter der dem medizinischen Instrument zugeführten Reinigungs- oder Pflegemedien und/ oder des Betriebszustandes der Energieerzeugungseinheit bestimmt. Hierzu wird der Adapter an eine Medienzuführung des Reinigungs- oder Pflegegeräts angeschlossen. Diese ist vorzugsweise ebenfalls durch eine standardisierte Schnittstelle, insbesondere mit einem Kupplungszapfen oder einer Kupplungsausnehmung, für Turbinen-, Motor-, Winkel-, oder Handstückanschlüsse ausgebildet. Diese weist bevorzugt eine oder mehrere Übergabestellen für Fluide wie z.B. Luft, Wasser oder Spray auf.

Anschließend erfolgt ein Abgleich der während der Reinigung oder Pflege erfassten Daten, insbesondere die durchgeführte Art der Aufbereitung, mit den während des Einsatzes des Instruments bestimmten Daten, insbesondere die durchzuführende Aufbereitung. Das Ergebnis, insbesondere ob ordnungsgemäß aufbereitet wurde, kann schließlich mittels der Anzeigeeinheit oder Anzeigesteuerung angezeigt werden.

Einen weiteren Vorteil bildet die Überwachung des Reinigungs- oder Pflegeprozesses selbst. Durch die Erfassung eines oder mehrerer Reinigungs- oder Pflegeparameter des Reinigungs- oder Pflegegeräts mittels der Sensoreinheit des Adapters kann festgestellt werden, ob die Aufbereitung ordnungsgemäß durchgeführt wurde. Ergibt ein Abgleich der erfassten Parameter mit den in der Speichereinheit des Adapters hinterlegten Referenzwerten eine Übereinstimmung, so zeigt der Adapter an, dass das Instrument ordnungsgemäß aufbereitet wurde und/ oder schreibt diese Information auf das Instrument.

Durch die Versorgung des Adapters, insbesondere dessen elektronische Bauteile, mit elektrischer Energie von einer eigenen Energieerzeugungseinheit, wird des Weiteren eine systemunabhängige und nachrüstbare Überwachung der Hygiene gewährleistet. Alle bisherigen bekannten Systeme basieren auf Kontroll- und Identifikationsmittel, welche in Dentaleinheiten und Reinigungs- oder Pflegegeräten integriert sind. Der medizinische Adapter bestimmt des Weiteren die Art der durchzuführenden bzw. durchgeführten Reinigung und/ oder Pflege mittels der Sensoreinheit, unabhängig von der dentalen Einheit und von dem Reinigungs- oder Pflegegerät.

Nachfolgend wird die Erfindung anhand mehrerer Ausführungsbeispiele und in Verbindung mit den beigefügten Zeichnungen erläutert.

Dabei zeigt:
Figur 1 ein erstes Ausführungsbeispiel des medizinischen, insbesondere dentalen, Adapters,
Figur 2 ein zweites Ausführungsbeispiel in Verbindung mit einem medizinischen, insbesondere dentalen, Instrument,
Figur 3 ein drittes Ausführungsbeispiel des medizinischen, insbesondere dentalen, Adapters mit einem medizinischen Instrument und einem Versorgungsschlauch einer dentalen Einheit,
Figur 4 ein Reinigungs- oder Pflegegerät mit einem vierten Ausführungsbeispiel des medizinischen, insbesondere dentalen, Adapters;

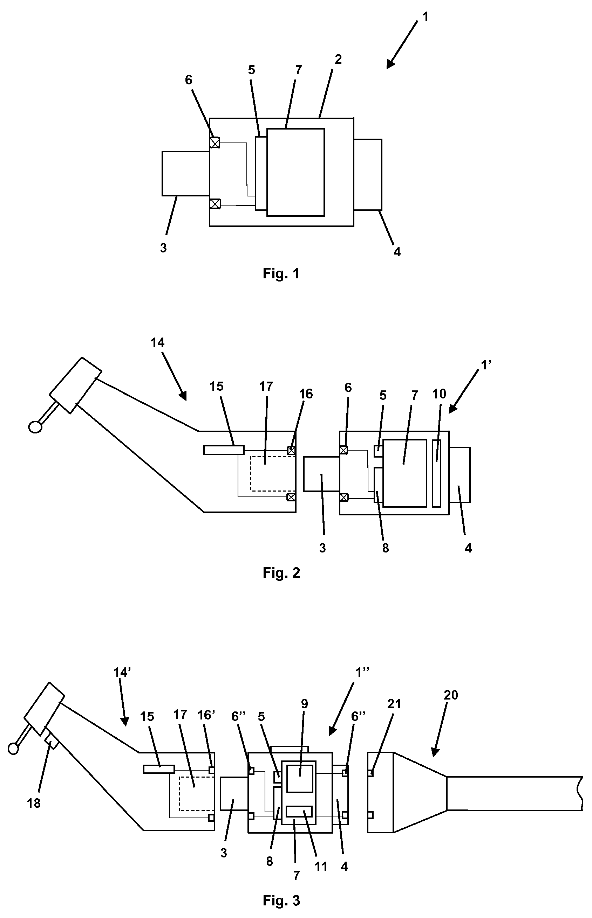

Der in Figur 1 dargestellte medizinische, insbesondere dentale, Adapter 1 zum Nachweis der Inbetriebnahme, Reinigung und/ oder Pflege eines medizinischen, insbesondere dentalen, Instruments, besteht aus einem Gehäuse 2 sowie aus einer ersten und zweiten Anschlussvorrichtungen 3, 4. Die erste Anschlussvorrichtungen 3 dient zum Anschließen eines medizinischen, insbesondere dentalen, Instruments, wie z.B. eines medizinischen, insbesondere dentalen Handstücks, eines Teils eines Handstücks, oder einer Kupplung, an den Adapter 1. Die zweite Anschlussvorrichtung 4 ist ausgebildet, den Adapter 1 mit einer Fluidquelle und/ oder einer Antriebseinheit zu verbinden. Beide Anschlussvorrichtungen 3, 4 sind vorzugsweise durch standardisierte Schnittstellen, insbesondere mit einem Kupplungszapfen oder einer Kupplungsausnehmung, für Turbinen-, Motor-, Winkel-, oder Handstückanschlüsse, ausgebildet. Diese weisen eine oder mehrere Übergabestellen für Fluide wie z.B. Luft, Wasser oder Spray auf. Der Adapter 1 selbst weist bevorzugt eine Fluidleitvorrichtung zur Förderung eines Fluidstroms durch den Adapter, insbesondere von der zweiten Anschlussvorrichtung 4 zu der ersten Anschlussvorrichtung 3, zu einem an den Adapter 1 angeschlossenen medizinischen, insbesondere dentalen, Instrument auf.

Des Weiteren weist der medizinische Adapter 1 eine Sensoreinheit 5 mit zumindest einem Sensor auf. Mittels einer Sende- und/ oder Empfangseinheit 6 werden die von der Sensoreinheit 5 erfassten Sensordaten, oder davon abgeleitet Daten, von dem Adapter 1 bevorzugt auf eine dentale Einheit, auf ein Reinigungs- oder Pflegegerät, oder insbesondere auf das mit dem Adapter 1 über die Anschlussvorrichtung 3 verbundene medizinische, insbesondere dentale, Instrument übertragen.

Zur Versorgung des Adapters 1, insbesondere dessen Sensoreinheit 5 und/ oder Sende- und/ oder Empfangseinheit 6 mit elektrischer Energie, weist dieser eine Energieerzeugungseinheit 7 auf. Die Energieerzeugungseinheit 7 wird durch Reinigungs-, Pflege oder Antriebsmedien der Fluidquelle oder durch eine Antriebsbewegung der Antriebseinheit der dentalen Einheit oder des Reinigungs- oder Pflegegeräts betrieben. Gemäß einem bevorzugten Ausführungsbeispiel ist die Energieerzeugungseinheit 7 des medizinischen Adapters 1 durch einen Generator ausgebildet. Dieser weist bevorzugt ein durch einen Fluidstrom in Rotation versetzbares Laufrad auf. Das Laufrad ist hierbei in einer Fluidleitvorrichtung des Adapters 1 angeordnet. Alternativ ist der Generator mit einer in Rotation versetzbaren Welle ausgebildet, die mittels einer Antriebseinheit der dentalen Einheit oder des Reinigungs- oder Pflegegeräts antreibbar ist.

Der zumindest eine Sensor der Sensoreinheit 5 ist ausgebildet, einen Betriebszustand der Energieerzeugungseinheit zu bestimmen.

In Figur 2 ist ein zweites Ausführungsbeispiel des medizinischen, insbesondere dentalen, Adapters 1' in Verbindung mit einem medizinischen, insbesondere dentalen, Instrument 14 abgebildet. Der Adapter 1' mit einer ersten und zweiten Anschlussvorrichtung 3, 4, einer Sensoreinheit 5, einer Sende- und/ Empfangseinheit 6, sowie einem Energieerzeugungseinheit 7, weist des Weiteren eine Speichereinheit 8 auf. Die Speichereinheit 8 dient zum Speichern von Sensordaten oder davon abgeleitete Daten. Des Weiteren können weitere Daten, insbesondere Handstück-Identifikationsdaten oder Referenzwerte für Betriebsparamterer der Antriebs-, Reinigungs-, oder Pflegemedien der Antriebseinheit und/ oder Fluidquelle in der Speichereinheit 8 hinterlegt sein. Zum Beschreiben der Speichereinheit 8 und zur Ausgabe von Daten ist diese bevorzugt mit der Sensoreinheit 5 sowie mit der Sende- und/ oder Empfangseinheit 6 verbunden.

Die Sende- und/ oder Empfangseinheit 6 ist vorzugsweise kabellos, insbesondere induktiv, ausgebildet und im Bereich der ersten Anschlussvorrichtung 3 angeordnet. Die Datenübertragung erfolgt hierbei bevorzugt mittels einer Sende- und/ oder Empfangsspule 6. Eine zweite Sende- und/ oder Empfangsspule 16 ist bevorzugt in dem mit dem Adapter 1' verbundenen Instrument 14, insbesondere im Bereich der Kupplungsausnehmung 17 angeordnet. Die induktive Kopplung der beiden als Antennen wirkenden Spulen 6, 16 dient sowohl dem Datenaustausch als auch der Energieübertragung. Zum Datenaustausch befindet sich vorzugsweise ein Datenspeicher 15, insbesondere ein Transponder, in dem medizinischen, insbesondere dentalen, Instrument.

Zur Anzeige der mittels der Sensoreinheit 5 erfassten Sensordaten oder davon abgeleitete Daten, oder zur Anzeige des Zustandes des mit dem Adapter 1' verbundenen medizinischen Instruments 14 oder der Art der Aufbereitung, die erfolgen soll, weist der Adapter 1' eine Anzeigeeinheit 10 auf. Die Anzeigeeinheit 10 ist hierbei bevorzugt graphisch durch ein Display, durch eine oder mehrere Leuchtdioden, oder akustisch, z.B. durch einen Summer, ausgebildet.

Figur 3 zeigt ein drittes Ausführungsbeispiel des medizinischen, insbesondere dentalen, Adapters 1" in Verbindung mit einem medizinischen, insbesondere dentalen, Instrument 14' und einem Versorgungsschlauch 20 einer medizinischen oder dentalen Einheit. Der Adapter 1" ist mittels der ersten Anschlussvorrichtung 3 mit einer Kupplungsausnehmung 17 des medizinischen Instruments 14' und mittels der zweiten Anschlussvorrichtung 4 mit dem Versorgungsschlauch 20 lösbar kuppelbar. Die mittels des Versorgungsschlauch 20 der dentalen Einheit dem medizinischen Instrument 14' zuführbaren Antriebsmedien und/ oder Antriebsbewegung werden zur Ermittlung der Art der Inbetriebnahme mittels der Sensoreinheit 5 des Adapters 1" erfasst.

Des Weiteren ist es möglich mittels des Adapters 1" den Typ des Instruments zu bestimmen. Hierbei wird vorzugsweise ein Datenspeicher 15 in dem medizinischen Instrument 14' mittels der Sende- und/ oder Empfangseinheit 6" des Adapters 1" abgefragt. Die Sende- und/ oder Empfangseinheit des Adapters 1" sowie des medizinischen Instruments 14' ist in diesem Ausführungsbeispiel kabelgebunden mittels elektrischer Kontakte 6", 16', insbesondere mittels Steckkontakte, ausgebildet.

Nach der Feststellung der Art des Betriebs, sowie die Art der durchzuführenden Aufbereitung, können diese Daten auf das medizinische Instrument 14', insbesondere auf dessen Datenspeicher 15 übertragen werden, oder bei fortlaufender Ankupplung auf dem Adapter 1", insbesondere in dessen Speichereinheit 8, verbleiben. Des Weiteren ist es möglich die Daten von dem Adapter 1" mittels elektrischer Kontakte 21 über den Versorgungsschlauch 20 zur dentalen Einheit zurückzuführen.

In dieser Ausführungsform weist der Adapter 1" des Weiteren einen Energiespeicher 9 auf, um die von der Energieerzeugungseinheit 7 erzeugte Energie zu speichern. Dies ermöglicht eine Versorgung der elektronischen Bauteile, insbesondere der Sensoreinheit 5, der Speichereinheit 8, sowie der Sende- und/ oder Empfangseinheit 6", mit Energie auch dann, wenn die Energieerzeugungseinheit 7 keine Energie erzeugt. Dieser Energiespeicher 9 ist vorzugsweise in dem Gehäuse 2 angeordnet und austauschbar.

Des Weiteren weist der Adapter 1" eine Anzeigesteuerung 11 auf, welche ausgebildet ist externe Anzeigemittel, insbesondere die Instrumentenbeleuchtung 18 des medizinischen Instruments 14' anzusteuern. Es wird so mittels der Instrumentenbeleuchtung 18 des Instruments 14', vorzugsweise durch Blinken der Beleuchtung 18, angezeigt, ob das Gerät ordnungsgemäß aufbereitet wurde.

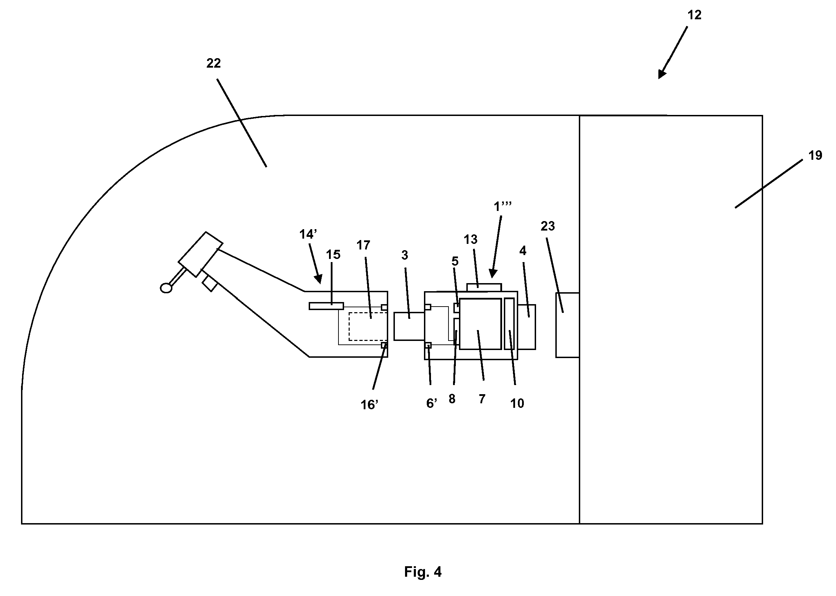

In Figur 4 ist ein Reinigungs- oder Pflegegerät 12 mit einem vierten Ausführungsbeispiel des medizinischen, insbesondere dentalen, Adapters 1"' gezeigt. Der Adapter 1'" ist über dessen zweite Anschlussvorrichtung 4 an eine in dem Reinigungs- oder Pflegeraum 22 des Reinigungs- oder Pflegegeräts 12 angeordnete Medienzuführung 23 kuppelbar. Ein zu reinigendes und/ oder zu pflegendes medizinisches Instrument 14' ist wiederum, insbesondere mittels dessen Kupplungsausnehmung 17, an die erste Anschlussvorrichtung 3 des Adapters 1'" anschließbar. Reinigungs- oder Pflegemedien des Reinigungs- oder Pflegegeräts 12 können so mittels der Medienzuführung 23 und mittels des Adapter 1'" dem medizinischen Instrument 14' zugeführt werden. Der Adapter 1'" weist hierzu eine Fluidleitvorrichtung mit vorzugsweise mehreren Fluidkanälen auf, welche sich bevorzugt von der ersten Anschlussvorrichtung 3 zur zweiten Anschlussvorrichtung 4 erstrecken. Die Kupplungsbereiche, insbesondere zwischen Medienzuführung 23 und Adapter 1'", sowie zwischen Adapter 1'" und Instrument 14', weisen hierzu mehrere Übergabestellen für die Reinigungs- oder Pflegemedien auf. Diese werden vorzugsweise in dem Reinigungs- oder Pflegegerät 12, insbesondere in einem oder mehreren Vorratsbehältern, in einem Steuergehäuse 19 aufbewahrt. Die Zuführung der vorzugsweise mehreren Reinigungs- oder Pflegemedien erfolgt seitens des Reinigungs- oder Pflegegeräts 12 insbesondere mittels Pumpen, Kompressoren oder Druckluft.

Wird ein Adapter 1'" an die Medienzuführung 23 eines Reinigungs- oder Pflegegeräts 12 angeschlossen und durch den Adapter 1'" ein mittels Druck beaufschlagtes Reinigungs- oder Pflegemedium zur Reinigung und/ oder Pflege des medizinischen Instruments 14' gefördert, so erzeugt die Energieerzeugungseinheit 7 des Adapters 1"', welche durch die Reinigungs- oder Pflegemedien antreibbar ist, elektrischer Energie, um die Sensoreinheit 5 und/ oder Sende- und/ oder Empfangseinheit 6' des Adapters 1'" mit elektrischer Energie zu versorgen. Die Sensoreinheit 5 kann so mittels des zumindest einen Sensors 13, welcher vorzugsweise an der Außenseite des Gehäuses des Adapters 1'" zum Ermitteln der Beaufschlagung der Instrumente mit einem Reinigungs- oder Pflegemedium, und/ oder in dem Adapter 1'" in einer der Fluidkanäle der Fluidleitvorrichtung angeordnet ist, zumindest einen Betriebsparameter des Reinigungs- oder Pflegemittels, insbesondere dessen Betriebsdruck, Betriebstemperatur und/ oder die Dauer der Medienzuführung erfassen. Hierdurch ist es möglich den jeweiligen Reinigungs- oder Pflegeschritt und/ oder den gesamten Reinigungs- oder Pflegeprozess zu bestimmen. Die erfassten Betriebsparameter der mehreren Reinigungs- oder Pflegemedien werden hierzu mit Referenzwerten, welche vorzugsweise in der Speichereinheit 8 hinterlegt sind, verglichen.

Nach der Bestimmung der Art der Reinigung und/ oder Pflege können diese Sensordaten, oder davon abgeleitete Daten auf dem Adapters 1"', insbesondere in dessen Speichereinheit 8, verbleiben und/ oder mittels der Sende- und/ oder Empfangseinheit 6' ausgegeben werden. Vorzugsweise werden die Daten auf das gereinigte und/ oder gepflegte Instrument 14' übertragen und dort mittels der Sende- und/ oder Empfangsvorrichtung 16' in dem Datenspeicher 15 abgespeichert. Des Weiteren ist es möglich, dass die mittels des Adapters 1"' erfassten Daten auf das Reinigungs- oder Pflegegerät 12 übertragen werden. Ebenso können die mittels der Sensoreinheit 5 erfassten Sensordaten oder davon abgeleitete Daten, wie z.B. gereinigt, gepflegt, desinfiziert, oder sterilisiert, an einer Anzeigeeinheit 10 des Adapters 1'" angezeigt werden.

Die Erfindung ist durch die Ansprüche 1 bis 14 definiert. Alle Merkmale aller beschriebenen und dargestellten Ausführungsbeispiele sind miteinander kombinierbar. Insbesondere sind die in den Figuren 1 bis 4 dargestellten Adapter 1 bis 1"' mit jedem in den Figuren 2 bis 4 dargestellten Geräten 14, 14', 20 sowie 12 verbindbar.

## Patentansprüche

1. Medizinischer, insbesondere dentaler, Adapter (1, 1', 1", 1"') zum Nachweis der Inbetriebnahme, Reinigung und/ oder Pflege eines medizinischen, insbesondere dentalen, Instruments, aufweisend:
- ein Gehäuse (2),
- eine erste Anschlussvorrichtung (3) zum, insbesondere lösbaren, Anschließen des medizinischen, insbesondere dentalen, Instruments an den Adapter (1, 1', 1" 1'"),
- eine zweite Anschlussvorrichtung (4) zum, insbesondere lösbaren, Verbinden des Adapters (1, 1', 1", 1'") mit einer Fluidquelle und/ oder einer Antriebseinheit,
- eine Sensoreinheit (5) mit zumindest einem Sensor,
- eine Sende- und/ oder Empfangseinheit (6, 6', 6"), welche ausgebildet ist von der Sensoreinheit (5) erfasste Daten zu empfangen und/ oder auszugeben, sowie
- eine durch die Fluidquelle oder Antriebseinheit antreibbare Energieerzeugungseinheit (7), die ausgebildet ist die Sensoreinheit (5) und/ oder die Sende- und/ oder Empfangseinheit (6, 6', 6") mit elektrischer Energie zu versorgen,
- **dadurch gekennzeichnet, dass** der zumindest eine Sensor der Sensoreinheit (5) ausgebildet ist einen Betriebszustand der Energieerzeugungseinheit (7) zu bestimmen.

2. Medizinischer, insbesondere dentaler, Adapter (1, 1', 1", 1'") nach Anspruch 1, **dadurch gekennzeichnet, dass** der Adapter (1, 1', 1", 1'") zumindest eine Fluidleitvorrichtung zur Förderung eines Fluidstroms von der ersten Anschlussvorrichtung (3) zur zweiten Anschlussvorrichtung (4) aufweist.

3. Medizinischer, insbesondere dentaler, Adapter (1, 1', 1", 1"') nach Anspruch 1 oder 2, **dadurch gekennzeichnet, dass** die Energieerzeugungseinheit (7) einen Generator aufweist, welcher ein durch den Adapter (1, 1', 1", 1"') geförderten Fluidstrom in Rotation versetzbares Laufrad oder eine in Rotation versetzbare Welle umfasst, die mittels der Antriebseinheit antreibbar ist.

4. Medizinischer, insbesondere dentaler, Adapter (1, 1', 1", 1"') nach Anspruch 3, **dadurch gekennzeichnet, dass** das Laufrad des Generators in der zumindest einen Fluidleitvorrichtung angeordnet ist und mittels des Fluidstroms antreibbar ist.

5. Medizinischer, insbesondere dentaler, Adapter (1, 1', 1", 1"') nach einem der vorherigen Ansprüche **dadurch gekennzeichnet, dass** ein zweiter Sensor einen Temperatursensor, Drucksensor, Durchflusssensor, ein Zeitglied, einen Farbsensor oder einen Sensor zur Analyse der Betriebsmedien umfasst.

6. Medizinischer, insbesondere dentaler, Adapter (1, 1', 1", 1"') nach einem der vorherigen Ansprüche, **dadurch gekennzeichnet, dass** der zweite Sensor der Sensoreinheit (5) in dem Gehäuse (2), bevorzugt in der zumindest einen Fluidleitvorrichtung, oder außerhalb des Gehäuses (2) angeordnet ist.

7. Medizinischer, insbesondere dentaler, Adapter (1, 1', 1", 1"') nach einem der vorherigen Ansprüche, **dadurch gekennzeichnet, dass** der Adapter (1, 1', 1", 1"') eine Speichereinheit (8) aufweist, um Sensordaten oder davon abgeleitete Daten zu speichern.

8. Medizinischer, insbesondere dentaler, Adapter (1, 1', 1", 1"') nach einem der vorherigen Ansprüche, **dadurch gekennzeichnet, dass** der Adapter (1, 1', 1", 1"') einen Energiespeicher (9) aufweist, um die von der Energieerzeugungseinheit (7) erzeugte Energie zu speichern.

9. Medizinischer, insbesondere dentaler, Adapter (1, 1', 1", 1"') nach einem der vorherigen Ansprüche, **dadurch gekennzeichnet, dass** die Sende- und/ oder Empfangseinheit (6, 6', 6") zum Senden und/ oder Empfangen von Sensordaten kabelgebunden ausgebildet ist.

10. Medizinischer, insbesondere dentaler, Adapter (1, 1', 1", 1"') nach einem der Ansprüche 1 bis 8, **dadurch gekennzeichnet, dass** die Sende- und/ oder Empfangseinheit (6, 6', 6") kabellos ausgebildet ist und die Datenübertragung bevorzugt induktiv erfolgt.

11. Medizinischer, insbesondere dentaler, Adapter (1, 1', 1", 1'") nach einem der vorherigen Ansprüche, **dadurch gekennzeichnet, dass** der Adapter (1, 1', 1", 1'") eine Anzeigeeinheit (10) aufweist, um die Sensordaten oder davon abgeleitete Daten anzuzeigen.

12. Medizinischer, insbesondere dentaler, Adapter (1) nach einem der vorherigen Ansprüche, **dadurch gekennzeichnet, dass** der Adapter (1, 1', 1", 1"') eine Anzeigesteuerung (11) aufweist, welche ausgebildet ist externe Anzeigemittel, insbesondere der Fluidquelle, der Antriebseinheit und/ oder des medizinischen, insbesondere dentalen, Instruments, anzusteuern, so dass die Sensordaten oder davon abgeleitete Daten an dem externen Anzeigemittel anzeigbar sind.

13. Reinigungs- oder Pflegegerät (12) für medizinische, insbesondere dentale, Instrumente, **gekennzeichnet durch** einen medizinischen, insbesondere dentalen, Adapter (1, 1', 1", 1"') nach einem der Ansprüche 1 bis 12, der insbesondere lösbar mit dem Reinigungs- oder Pflegegerät (12) verbindbar ist.

14. Verfahren zum Nachweis der Inbetriebnahme, Reinigung und/ oder Pflege eines medizinischen, insbesondere dentalen, Instruments unter Verwendung eines medizinischen, insbesondere dentalen, Adapters (1, 1', 1", 1"') nach einem der Ansprüche 1 bis 12, **gekennzeichnet durch** die Schritte:
- **Verbinden** des Adapters (1, 1', 1", 1"') mittels der ersten Anschlussvorrichtung (3) mit einem medizinischen, insbesondere dentalen, Instrument, sowie mittels der zweiten Anschlussvorrichtung (4) mit einer Fluidquelle und/ oder einer Antriebseinheit,
- **Erzeugen** von elektrischer Energie mittels der **durch** die Fluidquelle oder Antriebseinheit antreibbaren Energieerzeugungseinheit (7), um die Sensoreinheit (5) und/ oder Sende- und/ oder Empfangseinheit (6, 6', 6") des Adapters (1, 1', 1", 1"') mit elektrischer Energie zu versorgen,
- **Erfassen** zumindest eines Betriebszustandes der Energieerzeugungseinheit (7) mittels der Sensoreinheit (5),
- **Ausgeben** zumindest eines Sensorwerts oder eines davon abgeleiteten Werts, insbesondere zur Inbetriebnahme, Reinigung, oder Pflege des medizinischen Instruments mittels der Sende- und/ oder Empfangseinheit (6, 6', 6").

## Claims

1. A medical, in particular dental, adapter (1, 1', 1", 1"') for detection of the start of operation, for cleaning and/or care of a medical, in particular dental, instrument, comprising:
- a housing (2),
- a first connecting device (3) for connecting, in particular releasably, the medical, in particular dental, instrument to the adapter (1, 1', 1", 1"'),
- a second connecting device (4) for connecting, in particular releasably, the adapter (1, 1', 1", 1"') to a fluid source and/or to a drive unit,
- a sensor unit (5) having at least one sensor,
- a sending and/or receiving unit (6, 6', 6"), which is designed to receive and/or to output data detected by the sensor unit (5), as well as
- an energy-generating unit (7), which can be driven by the fluid source or the drive unit and is designed to supply electrical energy to the sensor unit (5) and/or to the sending and/or receiving unit (6, 6', 6"),
- **characterized in that** the at least one sensor of the sensor unit (5) is designed to determine an operating state of the energy-generating unit (7).

2. The medical, in particular dental, adapter (1, 1', 1", 1"') according to Claim 1, **characterized in that** the adapter (1, 1', 1", 1"') has at least one fluid-conducting device for conveying a fluid stream from the first connecting device (3) to the second connecting device (4).

3. The medical, in particular dental, adapter (1, 1', 1", 1"') according to Claim 1 or 2, **characterized in that** the energy-generating unit (7) has a generator, which comprises a rotor that can be induced to rotation by a fluid stream conveyed by the adapter (1, 1', 1", 1"') or a shaft that can be induced to rotation and can be driven by means of the drive unit.

4. The medical, in particular dental, adapter (1, 1', 1", 1"') according to Claim 3, **characterized in that** the rotor of the generator is arranged in the at least one fluid-conducting device and can be driven by means of the fluid stream.

5. The medical, in particular dental, adapter (1, 1', 1", 1"') according to any one of the preceding claims, **characterized in that** a second sensor comprises a temperature sensor, a pressure sensor, a flow rate sensor, a timer, a color sensor or a sensor for analysis of the operating media.

6. The medical, in particular dental, adapter (1, 1', 1", 1"') according to any one of the preceding claims, **characterized in that** the second sensor of the sensor unit (5) is arranged in the housing (2), preferably in the at least one fluid-conducting line or outside of the housing (2).

7. The medical, in particular dental, adapter (1, 1', 1", 1"') according to any one of the preceding claims, **characterized in that** the adapter (1, 1', 1", 1"') has a memory unit (8) for storing sensor data or data derived therefrom.

8. The medical, in particular dental, adapter (1, 1', 1", 1"') according to any one of the preceding claims, **characterized in that** the adapter (1, 1', 1", 1"') has an energy storage mechanism (9) for storing the energy generated by the energy-generating unit (7).

9. The medical, in particular dental, adapter (1, 1', 1", 1"') according to any one of the preceding claims, **characterized in that** the sending and/or receiving unit (6, 6', 6") is designed for sending and/or receiving sensor data in a hardwired arrangement.

10. The medical, in particular dental, adapter (1, 1', 1", 1"') according to any one of Claims 1 to 8, **characterized in that** the sending and/or receiving unit (6, 6', 6") is designed for hardwired transmission and the data transmission preferably takes place inductively.

11. The medical, in particular dental, adapter (1, 1', 1", 1"') according to any one of the preceding claims, **characterized in that** the adapter (1, 1', 1", 1"') has a display unit (10) for displaying the sensor data or data derived therefrom.

12. The medical, in particular dental, adapter (1) according to any one of the preceding claims, **characterized in that** the adapter (1, 1', 1", 1"') has a display control (11), which is designed for control of an external display means, in particular of the fluid source, the drive unit and/or the medical, in particular dental, instrument, so that the sensor data or data derived therefrom can be displayed on the external display means.

13. A cleaning or care device (12) for medical, in particular dental, instruments, **characterized by** a medical, in particular dental, adapter (1, 1', 1", 1"') according to any one of Claims 1 to 12, which can be connected, releasably in particular, to the cleaning or care device (12).

14. A method for detecting the start of operation, the cleaning and/or care of a medical, in particular dental, instrument using a medical, in particular dental, adapter (1, 1', 1", 1"') according to any one of Claims 1 to 12, **characterized by** the steps:
- **connection** of the adapter (1, 1', 1", 1"') to a medical, in particular dental, instrument by means of the first connecting device (3) as well as to a fluid source and/or to a drive unit by means of the second connecting device (4),
- **generation** of electrical energy by means of the energy-generating unit (7) that can be driven by means of the fluid source or the drive unit for supplying electrical energy to the sensor unit (5) and/or the sending and/or receiving unit (6, 6', 6") of the adapter (1, 1', 1", 1"'),
- **detection** of at least one operating state of the energy-generating unit (7) by means of the sensor unit (5),
- **output** of at least one sensor value or a value derived therefrom, in particular for the start of operation, for cleaning or care of the medical instrument by means of the sending and/or receiving unit (6, 6', 6").

## Revendications

1. Adaptateur (1, 1', 1", 1"') médical, en particulier dentaire, pour démontrer la mise en service, le nettoyage et/ou l'entretien d'un instrument médical, en particulier dentaire, présentant :
- un boîtier (2),
- un premier dispositif de raccordement (3) pour le raccordement - en particulier détachable - de l'instrument médical, en particulier dentaire, à l'adaptateur (1, 1', 1", 1"'),
- un deuxième dispositif de raccordement (4) pour le raccordement - en particulier détachable - de l'adaptateur (1, 1', 1", 1"') à une source de fluide et/ou une unité d'entraînement,
- une unité de détection (5) avec au moins un capteur,
- une unité d'émission et/ou de réception (6, 6', 6"), laquelle est réalisée pour la réception ou l'émission des données détectées par l'unité de détection (5), ainsi que
- une unité de production d'énergie (7) pouvant être entraînée par la source de fluide ou l'unité d'entraînement, laquelle est réalisée pour alimenter en énergie électrique l'unité de détection(5) et/ou l'unité d'émission et/ou de réception (6, 6', 6"),
- **caractérisé en ce que** l'au moins un capteur de l'unité de détection (5) est réalisé pour déterminer un état de fonctionnement de l'unité de production d'énergie (7).

2. Adaptateur (1, 1', 1", 1"') médical, en particulier dentaire selon la revendication 1, **caractérisé en ce que** l'adaptateur (1, 1', 1", 1"') présente au moins un dispositif de conduction de fluide pour le transport d'un flux de fluide depuis le premier dispositif de raccordement (3) jusqu'au deuxième dispositif de raccordement (4).

3. Adaptateur (1, 1', 1", 1"') médical, en particulier dentaire selon la revendication 1 ou 2, **caractérisé en ce que** l'unité de production d'énergie (7) présente un générateur, lequel comprend une roue pouvant être mise en rotation par un flux de fluide transporté par l'adaptateur (1, 1', 1", 1"') ou un arbre pouvant être mis en rotation, lequel peut être mis en rotation au moyen de l'unité d'entraînement.

4. Adaptateur (1, 1', 1", 1"') médical, en particulier dentaire selon la revendication 3, **caractérisé en ce que** la roue du générateur est disposée dans l'au moins un dispositif de conduction de fluide et peut être entraînée au moyen du flux de fluide.

5. Adaptateur (1, 1', 1", 1"') médical, en particulier dentaire selon l'une des revendications précédentes, **caractérisé en ce qu'**un deuxième capteur comprend un capteur de température, un capteur de pression, un débitmètre, un organe minuteur, un capteur de couleur ou un capteur pour l'analyse des fluides de fonctionnement.

6. Adaptateur (1, 1', 1", 1"') médical, en particulier dentaire selon l'une des revendications précédentes, **caractérisé en ce que** le deuxième capteur de l'unité de détection (5) est disposé dans le boîtier (2), de préférence dans l'au moins un dispositif de conduction de fluide, ou bien en-dehors du boîtier (2).

7. Adaptateur (1, 1', 1", 1"') médical, en particulier dentaire selon l'une des revendications précédentes, **caractérisé en ce que** l'adaptateur (1, 1', 1", 1"') présente une unité de mémoire (8) pour enregistrer des données de détection ou des données dérivées de celles-ci.

8. Adaptateur (1, 1', 1", 1"') médical, en particulier dentaire selon l'une des revendications précédentes, **caractérisé en ce que** l'adaptateur (1, 1', 1", 1"') présente un accumulateur d'énergie (9) pour accumuler l'énergie produite par l'unité de production d'énergie (7).

9. Adaptateur (1, 1', 1", 1"') médical, en particulier dentaire selon l'une des revendications précédentes, **caractérisé en ce que** l'unité d'émission et/ou de réception (6, 6', 6") est réalisée pour l'émission et/ou la réception par câble de données de détection.

10. Adaptateur (1, 1', 1", 1"') médical, en particulier dentaire selon l'une des revendications 1 à 8, **caractérisé en ce que** l'unité d'émission et/ou de réception (6, 6', 6") est réalisée sans câble et **en ce que** la transmission de données s'effectue de préférence de manière inductive.

11. Adaptateur (1, 1', 1", 1"') médical, en particulier dentaire selon l'une des revendications précédentes, **caractérisé en ce que** l'adaptateur (1, 1', 1", 1"') présente une unité d'affichage (10) pour afficher les données de détection ou des données dérivées de celles-ci.

12. Adaptateur (1) médical, en particulier dentaire selon l'une des revendications précédentes, **caractérisé en ce que** l'adaptateur (1, 1', 1", 1"') présente une commande d'affichage (11) qui est réalisée pour commander des moyens d'affichage externes, en particulier de la source de fluide, de l'unité d'entraînement et/ou de l'instrument médical, en particulier dentaire, de telle sorte que les données de détection ou des données dérivées de celles-ci peuvent être affichées sur le moyen d'affichage externe.

13. Appareil de nettoyage ou d'entretien (12) pour instruments médicaux, en particulier dentaires, **caractérisé par** un adaptateur (1, 1', 1", 1"') médical, en particulier dentaire selon l'une des revendications 1 à 12, lequel peut en particulier être raccordé de manière détachable à l'appareil de nettoyage et/ou d'entretien (12).

14. Procédé pour démontrer la mise en service, le nettoyage et/ou l'entretien d'un instrument médical, en particulier dentaire en utilisant un adaptateur (1, 1', 1", 1"') médical, en particulier dentaire selon l'une des revendications 1 à 12, **caractérisé par** les étapes suivantes :
- **le raccordement,** au moyen du premier dispositif de raccordement (3), de l'adaptateur (1, 1', 1", 1"') à un instrument médical, en particulier dentaire, ainsi qu'au moyen du deuxième dispositif de raccordement (4) à une source de fluide et/ou une unité d'entraînement,
- **la production** d'énergie électrique au moyen de l'unité de production d'énergie (7) pouvant être entraînée par la source de fluide ou l'unité d'entraînement afin d'alimenter en énergie électrique l'unité de détection (5) et/ou l'unité d'émission et/ou de réception (6, 6', 6") de l'adaptateur (1, 1', 1", 1"'),
- **la détection** d'au moins un état de fonctionnement de l'unité de production d'énergie (7) au moyen de l'unité de détection (5),
- **la sortie** d'au moins une valeur de détection ou d'une valeur dérivée de celle-ci, en particulier pour la mise en service, le nettoyage ou l'entretien de l'instrument médical au moyen de l'unité d'émission et/ou de réception (6, 6', 6").
